# EUROPEAN PATENT APPLICATION

(11) **EP 1 615 136 A2**
(43) Date of publication of application: **11.01.2006**
(21) Application number: 04019532.3
(22) Date of filing: 24.07.2004
(51) Int. Cl.: G06F 13/42

(54) **A USB device for decreasing the current at load**

(30) Priority: 06.07.2004 EP 04015812
(71) Applicant: Richip Incorporated, Jhubei City, Hsinchu County 302 (TW)
(72) Inventor: Lin, Chanson, Jhubai City Hsinchu County 302 Taiwan (CN); Tai, Jui-Jung, Bade City Taoyuan County 334 Taiwan (CN); Lee, Chung-Liang, Neihu District Taipei City 114 Taiwan (CN)
(74) Representative: LOUIS, PÖHLAU, LOHRENTZ

(57) **Abstract**

A USB device for decreasing the current at load is provided. The USB device comprises a Client USB device, having a client functional module electronically connected to a client USB controller, connected to an Improved-USB bus and a client USB Physical Layer individually, wherein the client USB Physical Layer is further connected to a Standard-USB bus. Through this Standard-USB bus, the Client USB device is connected to a host USB Physical Layer of an external host. On the other hand, via the Improved-USB bus, the Client USB device is connected to an external host without host USB Physical Layer. Because both of the Client USB device and the external host have the option of using the Improved-USB bus, hence their Physical Layers being removed or idled.

## Description

### Field of the invention

The present invention is related to a USB device, and more particularly to a USB device for decreasing the operation current consumption.

### Background of the invention

As already known, that the USB (Universal Serial Bus) is a serial transmittal interface used on the information products. After been promoted for many years, it has become the representative of the interfaces among the information products. It could fast and easily connect up plural information products without the inconvenience of having to open the external cases of these products for adding connections. The USB provides consumers with an interface that has advantages of convenience, highly expandability and fast transmission speed. Therefore, it is widely used in the fields of computer peripherals, Information appliances (IA) and consumable electronic products.

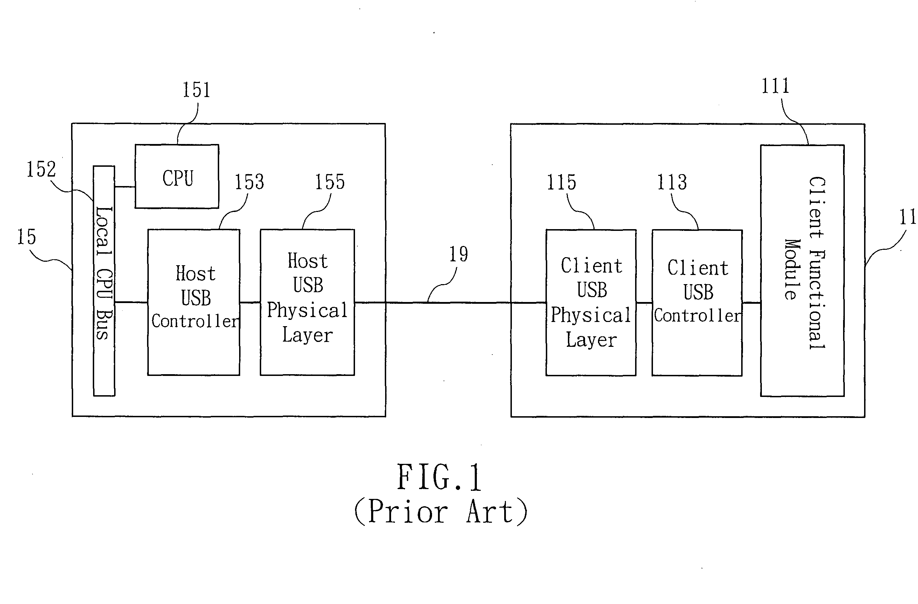

Fig.1 shows a structural block diagram of the conventional USB device. The conventional USA transmitting devices can be categorized into two types, the Host USB device (15) and the Client USB device (11). The two can be connected together by a Standard-USB bus, which acts as the data transmission line between the two devices. Wherein, the Client USB device (11) comprises a client functional module (111), such as memory media, which is electronically connected to a client USB controller (113) and that is further electronically connected to a Client USB Physical Layer(115). Furthermore, the Host USB device (15) comprises a CPU (151), which can be directly connected to a host USB controller (153) or electronically connected thereto by a local CPU bus (152), and the host USB controller (153) is further electronically joined to a host USB Physical Layer (155).

Moreover, the Standard-USB bus (19) is a substantial transmission line, which is mainly comprised by a bus with 4-circuit lines namely VBUS, D+, D-, and ground line. The D+ and D- is utilized for data transmission and the power source of VBUS could be provided either from the Host USB device (15) or a power supply (not shown). Because of the Differential Pair circuit design of the D+ and D-, the digital transformation device must be practiced by both the client USB Physical Layer(115) and the host USB Physical Layer (155) for realizing the synchronization of transmission speed. Hence, either the client USB Physical Layer(115) or the host USB Physical Layer (155) have to have some essentially designed components such as PLL (Phase Lock Loop), Data/Clock Recovery and Transmission Terminations etc. However, these components consume at least 55mA of operation current, which a relatively large amount. Due to the existence of the client USB Physical Layer(115) and the host USB Physical Layer (155), the design and the usage of the USB device are facing a fundamental problem, which is that each component has a operation current draining threshold limitation. Without it, the functions of the other operating components will be seriously influenced or even hindered. The above-mentioned design and usage limitation of the components is especially serious to those movable and low operating current USB transmission devices. The examples of those are the consumable electronic products and mobile devices. This limitation prohibits these devices from acting probably as the Host USB device and further increases the design difficulties of the USB devices, yet also brings serious inconvenience when using these USB devices.

### Summary of the invention

Therefore, the main emphasis of the present invention is to provide a new design of USB device, especially a USB device that could effectively reduce the operation current consumption, whereby facilitating on the design process and enhancing the usage convenience of products.

It is the primary object of the present invention to provide a USB device for reducing the operation current. The problem of excessive power consumption on the USB device is caused by the existence of the USB Physical Layers and Standard-USB bus. This would be solved by means of replacing the USB Physical Layers and Standard-USB bus with an Improved-USB bus.

It is another object of the present invention to provide a USB device for decreasing the current at load. The current consumption of the USB device can be effectively reduced by means of removing or idling the USB Physical Layers within, whereby the design and usage convenience could be greatly enhanced.

It is still another object of the present invention to provide a USB device for decreasing the current at load for the purpose of expending its application field and product types.

Thus, for achieving the above-mentioned goal, in a preferred embodiment of the present invention should consist of: a Host USB device comprising at least a CPU, which is electronically connected to a host USB controller; and a Client USB device comprising at least a client functional module, which is electronically connected to a client USB controller. The client USB controller can be further connected to either the CPU or the host USB controller by means of the Improved-USB bus.

In another preferred embodiment of the present invention consists of : a Host USB device comprising a CPU, which is electronically connected to a host USB controller that is further electronically joined to a host USB Physical Layer; a Client USB device comprising a client functional module, which is electronically connected to a client USB controller that is further electronically joined to a Client USB Physical Layer; a Improved-USB bus with two-connecting- ends where one of the end is connected to the client USB controller and the other is either connected to the host USB controller or directly to the CPU; a Standard-USB bus that is used to join the host USB Physical Layer and the Client USB Physical Layer.

Other and further features, advantages and benefits of the invention will become apparent in the following description taken in conjunction with the following drawings. It is to be understood that the foregoing general description and following detailed description are exemplary and explanatory but are not to be restrictive of the invention. The accompanying drawings are incorporated in and constitute a part of this application and, together with the description, serve to explain the principles of the invention in general terms. Like numerals refer to like parts throughout the disclosure.

The various objects and advantages of the present invention will be more readily understood from the following detailed description when read in conjunction with the appended drawings, in which:

### Brief description of drawings

Fig.1 shows a structural diagram of a conventional USB device;
Fig.2 shows a structural diagram of a preferred embodiment of the present invention;
Fig.3 shows another structural diagram of a preferred embodiment of the present invention;
Fig.4 shows another structural diagram of a preferred embodiment of the present invention; and
Fig.5 shows the follow diagram during the processing of the mode setting.

### Detailed description of the invention

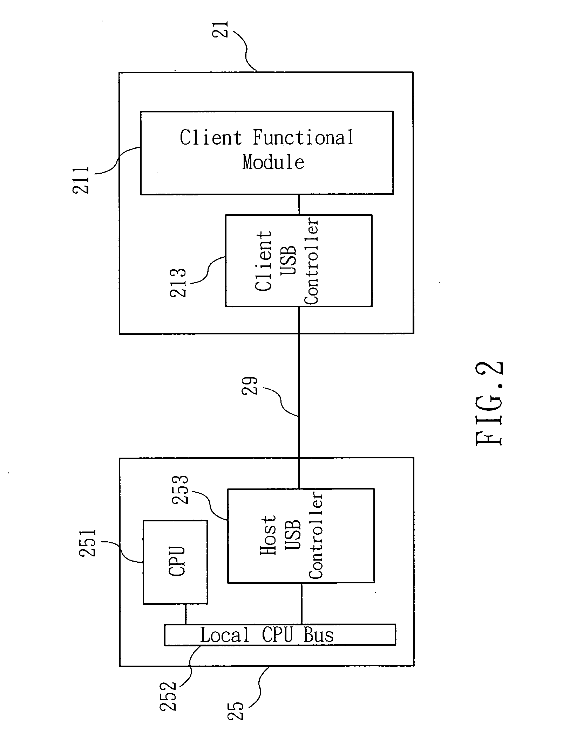

Fig.2 shows a structural diagram of a preferred embodiment of the present invention. As shown in the diagram, the present invention can be applied to a Client USB device (21) or a Host USB device (25). The examples of such devices are: data storing device comprising at least one USB (e.g. external hard disk, DVD-ROM, CD-R, CD-RW, or MO etc.), computer peripherals (e.g. scanner, printer, mouse, keyboard or card-reader etc.), computer devices (e.g. Notebook PC, Desktop PC, or Table PC etc.), electronic keys, multi-media devices, photographing device (e.g. digital camera, digital video camera, or computer camera etc.), communication devices (e.g. mobile phones etc.), 3C consumable electronic devices (e.g. PDA etc.), IA information appliances, or I/O functional devices.

Wherein, the Client USB device (21) comprises at least a client functional module (211), which possesses a special function and purpose, such as data storage module, according to the different designs of the USB device. The client functional module (211) can be electronically connected to a client USB controller (213) that is connected to a Host USB device (25) by means of an Improved-USB bus (29). Moreover, the Host USB device (25) (also called an external Host) comprises at least one CPU (251), which is electronically connected to a host USB controller (253) either directly or by means of a local CPU bus (252). The host USB controller (253) can similarly connected with the Client USB device (21) by means of the Improved-USB bus (29).

Due to the usage of Standard-USB bus as the data transmitting circuit in the conventional USB device, there must exist a USB Physical Layer in both Host USB device and Client USB device. This situation up brings the disadvantage that the operation current is not able to get effectively reduced. However, when the USB device is put to use, the Standard USB is not always a necessity; for example, one can directly connect up the Host USB device and Client USB device as one way of making the Improved-USB bus (29). Therefore, there will be no requirement of USB Physical Layers in either Host USB device or Client USB device, whereby the current consumption can be reduced. According to the experiments done on the present invention, the saved current could be well above 55mA and therefore, it is quite suitable to use on general 3C consumable products or mobile devices.

The above-mentioned Improved-USB bus (29) comprises at least one data transmission line (not shown), which could be set to transmit data or control signals synchronously or asynchronously, and thus it is compatible to general USB transmission protocol. Further, a synchronizing clock line is also needed if the transmission desires to be practiced synchronously. The above-mentioned data transmission line could be designed in a serial or parallel configuration. If the data transmission line adopts the parallel configuration, it is also possible to design it in a 4-bit, 8-bit or 16-bit mode. Therefore, the Improved-USB bus (29) in a preferred embodiment of the present invention is a Data/Clock transmission line.

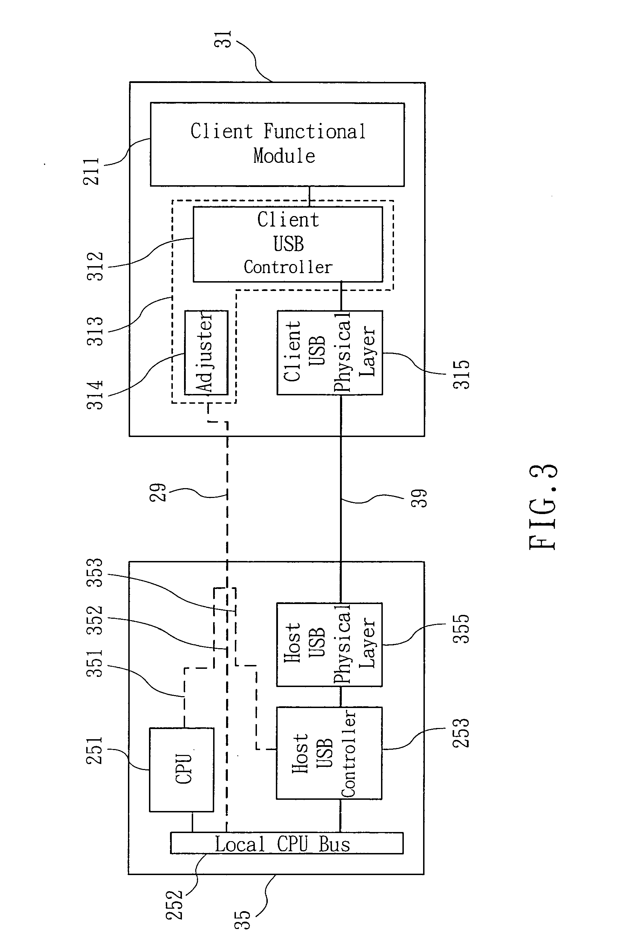

Fig.3 shows another structural diagram of a preferred embodiment of the present invention. As shown in this diagram, the present invention separately sets a Client USB device (31) and a Host USB device (35) as a dual-mode structure.

Wherein, besides the said client functional module (211) and the client USB controller (312) in the previously described preferred embodiment, the Client USB device (31) in this preferred embodiment further comprises a client USB Physical Layer (315), which is the same as in the conventional USB device. The client USB Physical Layer (315) could also be electronically connected to the client USB controller (312). In the Host USB device of this preferred embodiment consists of a CPU (251), a local CPU bus (252) and a host USB controller (253) that could be connected to the client USB controller (312) of the Client USB device (31) by the means of Improved-USB bus (29).

Moreover, the Host USB device (35) further comprises a host USB Physical Layer (355) that could also be electronically connected to the host USB controller (253) and the client USB Physical Layer (315) of the Client USB device (31) by the means of Standard-USB bus (39). Therefore, in either Client USB device (31) or Host USB device (35), one could choose to proceed with an Improved-USB bus Mode through Improved-USB bus (29) or a Standard-USB bus Mode through Standard-USB bus (39) according to the practical needs. Thus, the dual-mode structure could be formed in either Client USB device (31) or Host USB device (35); this setting differs from the single mode design in the previously said preferred embodiment.

Between the client USB controller (312) and the Improved-USB bus (29) is placed with a communicating tool, adjuster (314), which is used to facilitate data transmission. The client USB controller (312) could act the same function as conventional client USB controller (312) by adding the design of the adjuster (314). Nevertheless, the function of the adjuster (314) could also get executed right within the client USB controller (312). Therefore, the client USB controller (312) and the adjuster (314) could also get further integrated to form a client controller (313).

Furthermore, by taking the practical circuits design into consideration, the Improved-USB bus (29) could have options in ways of connecting to the CPU (251). Firstly, it could be directly connected to the CPU (251) by means of a first connecting circuit (351). Secondly, it could be connected to CPU (251) through a second connecting circuit (352) and the local CPU bus (252). Thirdly, it could be connected to CPU (251) through a third connecting circuit (353) and the host USB controller (253).

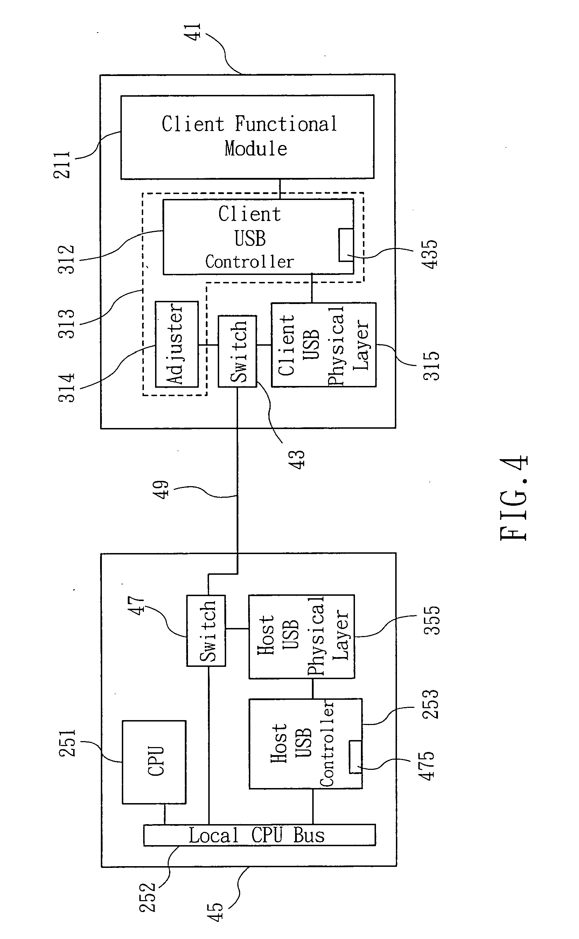

Fig.4 shows another structural diagram of a preferred embodiment of the present invention. As shown is this diagram, a Client USB device (41) and a Host USB device (45) are both a dual-mode structure that has options of proceeding with Improved-USB bus Mode through the USB Physical Layer, or Standard-USB bus Mode through the USB Physical Layer. Hence, a client mode switch (43) could be placed to join the client controller (313) (adjuster (314) and client USB controller (312)) of the Client USB device (41), the client USB Physical Layer (315), and a USB (49) for switching the modes of the Client USB device (41) between the Improved-USB bus Mode and the Standard-USB bus Mode. The function of the client mode switch (43) could also be designed within the client USB controller (312), such as shown as client auto-mode switch (435) in Fig. 4.

The same principles could be applied to the Host USB device (45) to comprise a Host mode switch (47) or place a host auto-mode switch (475) within the host USB controller (253). Thus, the Host USB device (45) could be set either in an Improved-USB bus Mode or a Standard-USB bus Mode.

When the Client USB device (41) and the Host USB device (45) are individually set to the Improved-USB bus Mode, or both was designed to be the Improved-USB bus Mode of a single mode design, the USB (49) would function as the Improved-USB bus. On the contrary, if the Client USB device (41) and the Host USB device (45) are individually set to the Standard-USB bus Mode, or both was designed to be the Standard-USB bus Mode of a single mode design, the USB (49) would then function as the Standard-USB bus.

Furthermore, the client mode switch (43), client auto-mode switch (435), host mode switch (47) and the host auto-mode switch (475) all could be designed as a manual switch for mode setting. Users could manually switch the Client USB device (41) and the Host USB device (45) between the Improved-USB bus Mode and the Standard-USB bus Mode. In the same manner, the client mode switch (43), client auto-mode switch (435), host mode switch (47) and the host auto-mode switch (475) all could be designed as a electronic switch for mode setting. By using electronic detection to decide and switch Client USB device (41) and the Host USB device (45) between the Improved-USB bus Mode and the Standard-USB bus Mode.

The above-mentioned Client USB device (31) could be comprises at least an interface (not shown), which selected from one of xD, memory stick, MSPro, CF card, SD, MMC, and Smart Media.

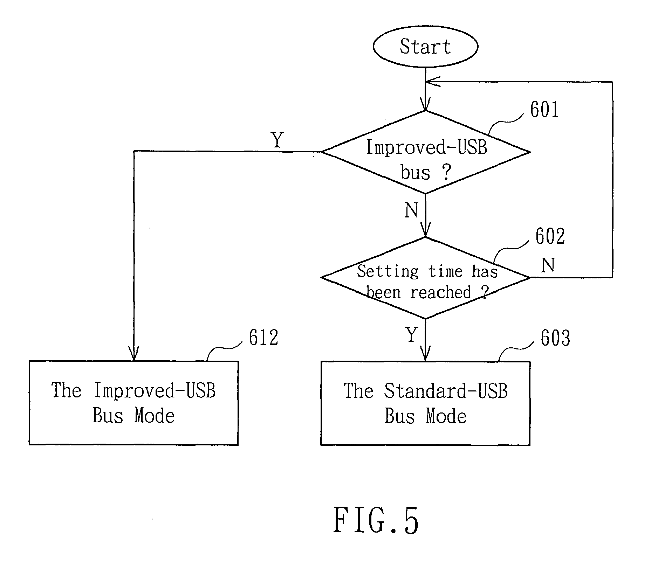

Lastly, Fig. 5 shows the follow diagram during the processing of the mode setting. As shown in Fig. 5, if the client mode switch (43), client auto-mode switch (435), host mode switch (47) and the host auto-mode switch (475) are mode switches of electronic nature, whereof the electronic detection mode could have the following steps:

### Step 601

Detect whether the Client USB device (41), the Host USB device (45) and the USB (49) are in an Improved-USB bus Mode? If they are positive, detection proceed to Step 612. If negative, then proceed to Step 602.

### Step 602

Because the detection did not receive a definite signal to indicate that the Client USB device (41) and the Host USB device (45) are indeed in their Improved-USB bus Mode. Therefore, it further detects whether the setting time has been reached. If it is positive, then Step 603 is executed. If it is negative, then return to Step 601 and keep waiting for an assured positive signal of Improved-USB bus Mode.

### Step 603

At this stage, it shows that the Client USB device (41), the Host USB device (45) and the USB (49) are not in an Improved-USB bus Mode. Therefore, the setting will be switched to the Standard-USB bus Mode for transmitting USB data.

### Step 612

The Client USB device (41), the Host USB device (45) and the USB (49) are in an Improved-USB bus Mode. Therefore the data transmitting procedure would be done in Improved-USB bus Mode.

To sum up, it should be clear that the present invention is related to a USB device for decreasing the current at load consumption, whereby it brings benefits and convenience on the design and usage of products.

Although the present invention has been described with reference to the preferred embodiment thereof, it will be understood that the invention is not limited to the details thereof. Various substitutions and modifications have suggested in the foregoing description, and other will occur to those of ordinary skill in art. Therefore, all such substitutions and modifications are intended to be embraced within the scope of the invention as defined in the appended claims.

## Claims

1. A USB device for decreasing the current at load, comprising:
a Host USB device, comprising at least a CPU electronically connected to a host USB controller; and
a Client USB device, comprising at least a client-end functional module electronically connected to a client USB controller, wherein said client USB controller is selectively connected to said CPU directly or a host-end USB controller by means of an Improved-USB bus.

2. The USB device of claim 1, wherein said Improved-USB bus comprises at least one data transmission line, and selectively transmits data through a synchronous or asynchronous clock line by a general USB transmission protocol.

3. The USB device of claim 1, wherein further comprises an adjuster placed between said client USB controller and said Improved-USB bus.

4. A USB device for decreasing the current at load, comprising:
a Host USB device, comprising at least a CPU electronically connected to a host USB controller, wherein said host USB controller is electronically connected to a host USB Physical Layer;
a Client USB device, comprising at least a client-end functional module electronically connected to a client USB controller, wherein said client USB controller is connected to a client USB Physical Layer;
an Improved-USB bus, connected to said client USB controller from one end thereof and selectively connected to said host USB controller or said CPU from the other end thereof; and
a Standard-USB bus for connecting said host USB Physical Layer and said client USB Physical Layer.

5. The USB device of claim 4, wherein further comprises an adjuster placed between said client USB controller and said Improved-USB bus, a USB bus is integrated by said Improved-USB bus and said Standard-USB bus, between said client USB controller and said client USB Physical Layer, said USB bus further comprising a client mode switch for selectively switching said USB bus at an Improved-USB bus or a Standard-USB bus, and said Improved-USB bus further comprising a host mode switch for selectively switching said USB bus at an Improved-USB bus or a Standard-USB bus, and at least one data transmission line, for selectively transmitting data through a synchronous or asynchronous clock line by a general USB transmission protocol.

6. A USB device for decreasing the current at load is **characterized by** a Host USB device comprising at least a CPU that could electronically connected to a host USB controller, wherein said host USB controller is connected to a Client USB device through an Improved-USB bus.

7. A USB device for decreasing the current at load is **characterized by** a Host USB device comprising at least a CPU connected to a Client USB device through an Improved-USB bus.

8. A USB device for decreasing the current at load is **characterized by** a Host USB device comprising at least a CPU electronically connected to a host USB controller, wherein said host USB controller further electronically connected to a host USB Physical Layer, said host USB controller connected to a Client USB device through an Improved-USB bus, said host USB Physical Layer connected to another Client USB device through a Standard-USB bus.

9. The USB device of claim 8, wherein further comprises a USB bus is integrated by said Improved-USB bus and said Standard-USB bus, between said client USB controller and said client USB Physical Layer, said USB bus further comprising a client mode switch for selectively switching said USB bus at an Improved-USB bus or a Standard-USB bus, and said Improved-USB bus further comprising a host mode switch for selectively switching said USB bus at an Improved-USB bus or a Standard-USB bus, and at least one data transmission line for selectively transmitting data through a synchronous or asynchronous clock line by a general USB transmission protocol.

10. A USB device for decreasing the current at load is **characterized by** a Client USB device comprising at least a client functional module electronically connected to a client USB controller, said client USB controller further connected to an external host through an Improved-USB bus.

11. The USB device of claim 10, wherein said Improved-USB bus comprises at least a data transmission line for selectively transmitting data through a synchronous or asynchronous clock line by a general USB transmission protocol.

12. The USB device of claim 10, wherein further comprises at least an interface selected from one of xD, memory stick, MSPro, CF card, SD, MMC, and Smart Media.

13. A USB device for decreasing the current at load is **characterized by** a Client USB device comprising at least a client functional module electronically connected to a client USB controller, said client USB controller further connected to a client USB Physical Layer, said client USB controller connected to an external host through an Improved-USB bus, and said client USB Physical Layer connected to an external host through a Standard-USB bus.
